**Europäisches Patentamt**

**European Patent Office**

**Office européen des brevets**

(11) Veröffentlichungsnummer : **0 045 043**
**B1**

(12) **EUROPÄISCHE PATENTSCHRIFT**

(45) Veröffentlichungstag der Patentschrift :
20.02.85

(21) Anmeldenummer : 81105745.4

(22) Anmeldetag : 21.07.81

(51) Int. Cl.⁴ : **G 06 F 13/12**

(54) Kanalanschlusssteuerung.

(30) Priorität : 30.07.80 DE 3028948

(43) Veröffentlichungstag der Anmeldung :
03.02.82 Patentblatt 82/05

(45) Bekanntmachung des Hinweises auf die Patenterteilung : 20.02.85 Patentblatt 85/08

(84) Benannte Vertragsstaaten :
AT BE CH DE FR GB IT LI NL SE

(56) Entgegenhaltungen :
FR-A- 2 341 898
US-A- 3 432 813
US-A- 3 559 187
IBM TECHNICAL DISCLOSURE BULLETIN, Band 21,
Nr. 5, Oktober 1978, Seite 1839 New York, U.S.A. J.T.
MOYER: "Common hardware for byte and block
multiplex channels"

(73) Patentinhaber : **COMPUTER GESELLSCHAFT KONS-
TANZ MBH**
**Max-Stromeyer-Strasse 116**
**D-7750 Konstanz (DE)**

(72) Erfinder : **Biegel, Karl Hans, Dipl.-Phys.**
**Katharinenweg 15**
**D-7750 Konstanz (DE)**

(74) Vertreter : **Mehl, Ernst, Dipl.-Ing. et al**
**Postfach 22 01 76**
**D-8000 München 22 (DE)**

## Beschreibung

Die Erfindung bezieht sich auf eine Kanalanschlußsteuerung gemäß dem Oberbegriff des Anspruchs 1. Eine derartige Kanalanschlußsteuerung ist aus der US-A-3 432 813 im Prinzip bekannt.

Peripheriegeräte werden von Gerätesteuerungen betrieben, die in bekannter Weise über eine Kanalschnittstelle einen direkten Anschluß zu einem aus mehreren Kanalanschlußsteuerungen bestehenden Multiplex-Kanal haben. Derartige Kanalanschlußsteuerungen können dabei wahlweise ein Einzelgerät oder eines von mehreren angeschlossenen Geräten im Einzelbetrieb, d. h. Selektorbetrieb oder mehrere Geräte simultan im Multiplexbetrieb bedienen. Der hierzu benötigte Multiplexkanal ist beispielsweise über einen zentralen Bus an einen vorzugsweise mikroprogrammierten Ein/Ausgabeprozessor angeschlossen, in dem die allen Peripheriegeräten gemeinsamen Ein- und Ausgabeoperationen ablaufen. Es handelt sich dabei insbesondere um den Verkehr mit dem Zentralprozessor, in dem das Arbeitsprogramm abläuft, weiterhin um die Fortschaltung bei Kettungsoperationen und um den Verkehrsabschluß. Für diese Operationen übt der Multiplexkanal im wesentlichen eine Vermittlungsfunktion und die Anpassung an die Kanalschnittstelle aus.

Der Datenverkehr zwischen dem Ein/Ausgabeprozessor und den einzelnen Peripheriegeräten erfolgt nun in der Weise, daß die Peripheriegeräte aufgrund von Anforderungssignalen bedient werden, die von der jeweils zugehörigen Gerätesteuerung an den Multiplexkanal gesendet werden.

Über eine Prioritäts- und Auswahlschaltung in der jeweiligen Kanalanschlußsteuerung werden dann seine Einrichtungen für einen Schnittstellenzyklus einer Gerätesteuerung zugewiesen und anschließend wieder freigegeben.

Der vorliegenden Erfindung liegt nun die Aufgabe zugrunde, eine Kanalanschlußsteuerung nach dem Oberbegriff des Anspruchs 1 in der Weise zu verbessern, daß durch eine überlappende Betriebsweise der Kanalsteuerung der Gasamtdatendurchsatz eines Multiplexkanals möglichst optimiert werden kann. Dabei wird von der Erkenntnis ausgegangen, daß die Kanalschlußsteuerung für einen Datentransport vergleichsweise weniger Zeit beansprucht als die Gerätesteuerung. Unter der gegebenen Voraussetzung einer durch die Kanalanschlußsteuerung gegebenen minimalen Bedienungs- und Ablaufdauer für einen Datentransport von einem Byte soll in einem Multiplexkanal bei gleichzeitigem Betrieb mehrerer oder aller Geräte ein Gesamtdatendurchsatz erbracht werden, der höher liegt, als sich durch das Aneinanderreihen der einzelnen Datentransporte erreichen ließe.

Diese Aufgabe wird erfindungsgemäß mit den kennzeichnenden Merkmalen des Anspruchs 1 gelöst. Mit einer derartigen Kanalanschlußsteuerung ergibt sich der Vorteil, daß diese bereits vor Ablauf des gerade stattfindenden Datentransports für einen weiteren Datentransport freigegeben werden kann. Dadurch läßt sich mit einer für mehrere Geräte gemeinsamen Gerätesteuerung eine Gesamtdatenrate erreichen, die höher liegt als sie mit einer Reservierung der Steuerung für jeweils einen vollen Datentransport zu erreichen wäre.

Eine vorteilhafte Weiterbildung der Erfindung ist im Anspruch 2 angegeben. Dadurch besteht die Möglichkeit, daß der Verkehr über die einzelnen Kanalanschlußsteuerungen wahlweise und unabhängig vom Verkehr auf den anderen Kanalanschlußsteuerungen im Selektor- oder Multiplex-Modus ablaufen kann.

Ein Ausführungsbeispiel der Erfindung wird im folgenden anhand der Zeichnung näher erläutert. Dabei zeigen :

Figur 1 den prinzipiellen Aufbau einer Datenverarbeitungsanlage mit Multiplexkanal anhand eines Blockschaltbildes,

Figur 2 Einzelheiten eines Kanals zur Verwendung in einer Schaltung gemäß Fig. 1,

Figur 3 das Zeitraster für drei Anschlüsse im Falle gleichzeitig eintreffender Datentransportanforderungen.

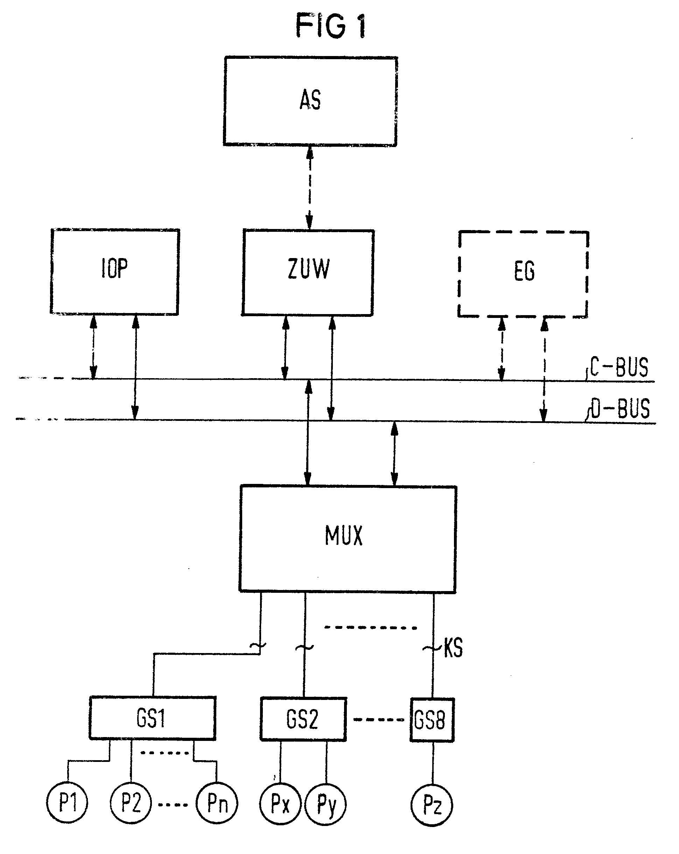

Die Datenverarbeitungsanlage gemäß Fig. 1 besteht aus einem in der Zeichnung nicht dargestellten Zentralprozessor, der über Steuerleitungen mit einem Ein/Ausgabeprozessor IOP verbunden ist, sowie aus einem zentralen Arbeitsspeicher AS, der neben den Programmen für Zentralprozessor und Ein/Ausgabeprozessor Kommunikationszellen zur Informationsübergabe zwischen den beiden Prozessoren enthält. Der Ein/Ausgabeprozessor IOP ist seinerseits mit einem Multiplexkanal MUX, eventuell weiteren Einrichtungen EG gleicher oder ähnlicher Art und mit einer Speicherverkehrssteuerung ZUW verbunden, die für den Ein/Ausgabeprozessor IOP und seine Zusatzeinrichtungen den Verkehr mit dem Arbeitsspeicher AS abwickelt. Ein/Ausgabeprozessor IOP, Multiplexkanal MUX, Speicherverkehrsteuerung ZUW und eventuelle Zusatzeinrichtungen sind über einen zentralen Bus verbunden, der aus einem Steuerteil C-BUS und einem Datenteil D-BUS besteht. Der Bus wird den angeschlossenen Einrichtungen auf Anforderung von einer im Ein/Ausgabeprozessor lokalisierten zentralen Verwaltung für einen Abwicklungszyklus zugeteilt. Der Multiplexkanal MUX ist über individuelle Kabelverbindungen mit einer Anzahl von Gerätesteuerungen GS1 ... GS8 verbunden, an die ihrerseits die Peripheriegeräte P1 ... PZ angeschlossen sind. Die Gerätesteuerungen können beliebig einem der drei grundsätzlichen Typen angehören. Im dargestellten Ausführungsbeispiel ist die Gerätesteuerung GS8 eine Einzelgerätesteuerung, an die nur ein Gerät angeschlossen ist. Diese Gerätesteuerung arbeitet daher ausschließlich im Selektormodus. Die Gerätesteuerung GS2 verfügt über zwei Geräte Px und Py, von denen eines bei der Verkehrseinleitung ausgewählt, d. h. selektiert wird und bis zum Verkehrsabschluß allein in Betrieb ist. Diese Gerätesteuerung GS2 arbeitet daher ebenfalls im Selektormodus. Die Gerätesteuerung GS1 ist dagegen eine Mehrfachsteuerung, bei der mehrere Geräte P1 ... Pn gleichzeitig in Betrieb sein können. Über die Kanalschnittstelle fließen daher in einer den Gerätetypen entsprechenden willkürlichen Mischung Daten der verschiedensten Geräte. Für jedes Datenzeichen, gegebenenfalls auch für eine Gruppe von zusammengehörigen Zeichen, ist daher die Kennzeichnung des zugehörigen Gerätes erforderlich, die in einem zusätzlichen Adressierungszyklus über die Schnittstelle erfolgt.

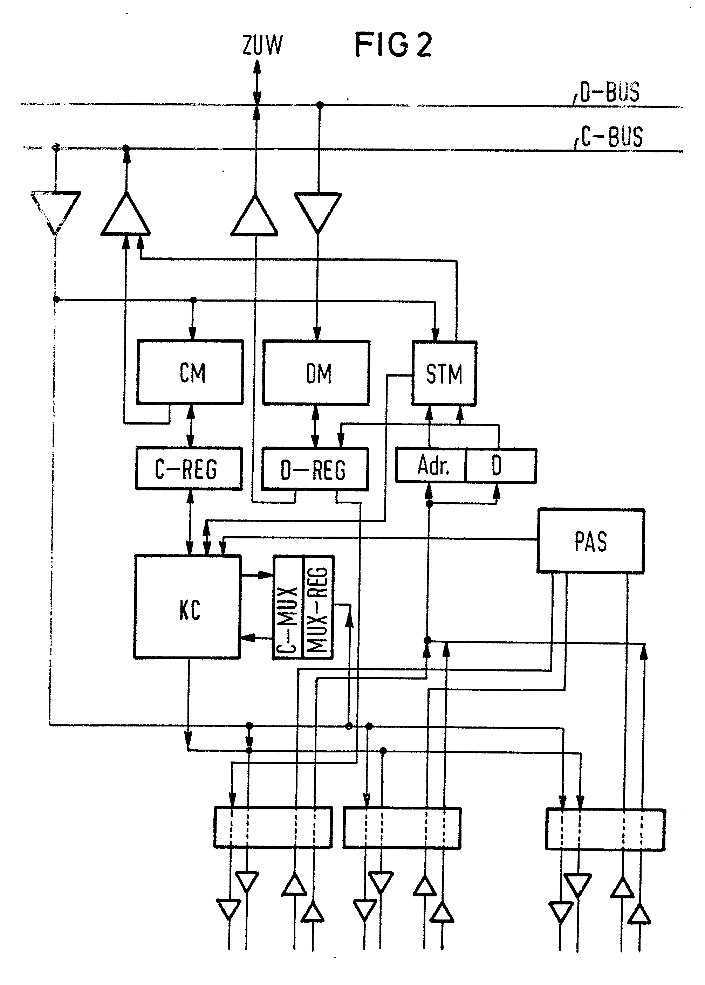

Einzelheiten des Multiplexkanals MUX sind in Fig. 2 dargestellt. Der Multiplexkanal MUX verfügt über einen schnellen Steuerspeicher CM. In ihm sind für jeden Anschluß zwei Steuerworte vorgesehen. Das erste Steuerwort dient dem laufenden Verkehr. Das zweite Steuerwort wird eingerichtet, wenn die Transportkapazität der ersten Steuerwortes für den betreffenden Ein/Ausgabebefehl nicht ausreicht oder wenn ein weiterer Abschnitt unmittelbar angekettet werden soll. Der Kanal schaltet dann nach Abarbeitung des ersten Steuerwortes direkt auf das zweite um und fordert vorsorglich vom Ein/Ausgabeprozessor IOP weitere Steuerinformation an, so daß auch bei hohen Datenraten eines Gerätes keine Bedienungslücken entstehen.

Die über die Kanalschnittstelle übertragenen Daten werden in einem zu dem betreffenden Anschluß gehörenden Datenpuffer DM zwischengespeichert, der im Ausführungsbeispiel eine Kapazität von vier Bytes hat, entsprechend der Breite des zentralen Datenbusses D-BUS. Wenn bei Ausgabeoperationen ein Pufferwort leer geworden ist, wird von der Speicherverkehrssteuerung ZUW ein weiteres Datenwort angefordet, das durch eine sogenannte Prefetch-Operation aus dem Arbeitsspeicher geholt worden ist. Bei Eingabeoperationen wird ein volles Datenpufferwort an die Speicherverkehrssteuerung übertragen, die diese Daten zwischenpuffert und nach Erreichen einer Abspeicherbedingung an den Arbeitsspeicher überträgt. Bei Ausgabeoperationen sorgt die Speicherverkehrssteuerung außerdem dafür, daß ein Mindestvorrat an Daten für die Weitergabe an den Multiplexkanal MUX vorhanden ist, so daß Anforderungen vom Multiplexkanal unmittelbar aus diesem Vorrat befriedigt werden können. Sobald der Vorrat unter eine vorgegebene Pegelmarke gesunken ist, wird mit einer Prefetch-Operation für das Auffüllen des Vorrates gesorgt.

Datentransportanforderungen können von mehreren oder allen angeschlossenen Gerätesteuerungen gleichzeitig eintreffen. Nach einer vorgegebenen Rangordnung bzw. Priorität wird durch eine Prioritäts- und Auswahlsteuerung PAS eine Anforderung ausgewählt und das betreffende Steuerwort ausgelesen. Ein Adreßzeiger wählt unter den beiden möglichen Steuerworten das jeweils aktive Steuerwort aus, das in das Steuerregister C REG übernommen wird.

Das Steuerwort enthält u. a. die Geräteadresse, einen Abschnittlängenzähler, einen Adreßzeiger für die jeweils gültige Byteposition im Datenpuffer DM, eine codierte Anzeige für Schreiben, Lesen vorwärts und Lesen rückwärts, dazu Positionen für die Eintragung erkannter Fehler. Eine Bitposition enthält eine Gültigkeitsanzeige, die vom Kanal gelöscht wird, wenn das letzte Byte für dieses Steuerwort übertragen wird. Bei Ausgabe wird das vom Adreßzeiger gekennzeichnete Datenbyte über die Schnittstelle übertragen, zusammen mit den für die Schnittstelle definierten Steuersignalen.

Bei Eingabe wird entsprechend das ankommende Byte in die vom Adreßzeiger gekennzeichnete Registerposition eingetragen und die Ausführung durch Übergabe der entsprechenden Schnittstellensignale an die Gerätesteuerung quittiert. Der Abschnittslängenzähler wird jeweils dekrementiert und der Adreßzeiger für den Datenpuffer DM neu eingestellt. Steuerwort und Datenwort werden anschliessend in die Speicher zurückgeschrieben.

Wenn bei Ausgabe ein Datenpufferwort leer geworden ist, bzw. bei Eingabe ein Wort voll wird, leitet der Kanal einen Zugriff an die Speicher-Verkehrssteuerung ein, um ein neues Wort abzuholen und in den Pufferspeicher einzutragen bzw. das Eingabedatenwort in die Speicher-Verkehrssteuerung zu übertragen, bevor Steuerwort und Datenwort in ihre entsprechenden Speicherstationen zurückgeschrieben werden.

Eine zusätzliche Operation wird ausgeführt, wenn der Abschnittlängenzähler erschöpft ist. Wenn im Steuerwort angezeigt ist, daß keine weitere Übertragung folgt, wird zusammen mit den übrigen Schnittstellensignalen eine ENDE-Kennung an die Gerätesteuerung übertragen. Wenn weitere Datentransporte folgen sollen, wird der Steuerwortadreßzeiger umgeschaltet, so daß für den nächsten Datentransport das alternative Steuerwort aktiviert wird. Bei Ausgabeoperationen wird zusätzlich aufgrund des neuen Steuerwortes ein Datenwort aus der Speicherverkehrssteuerung ZUW beschafft, damit bei der nächsten Datenanforderung bereits gültige Daten vorhanden sind. In beiden Fällen wird außerdem vom Ein/Ausgabeprozessor IOP weitere Steuerinformation angefordert, damit sie rechtzeitig vor dem erneuten Umschalten durch den Ein/Ausgabeprozessor IOP nachgeladen werden kann. Für die Anforderung wird von der Kanalsteuerung KC ein Statuswort mit entsprechender Kennzeichnung generiert und in den Statusspeicher STM eingetragen, aus dem es vom Ein/Ausgabeprozessor ausgelesen wird.

In den Fällen, in denen keine Speicherverkehrssteuerungzyklen erforderlich sind, ist für die Kanalsteuerung KC die Bearbeitung der Datenanforderungen mit dem Rückschreiben in Steuer- und Datenspeicher CM, DM beendet. Aufgrund der Signalisierungskonventionen für die Schnittstelle müssen die Signale noch für einige Zeit aufrechterhalten werden. Damit eine hohe Gesamtdatenrate erreicht werden kann, wird jedoch die Kanalsteuerung KC bereits nach dem Rückschreiben freigegeben, so daß eine Anforderung von einem anderen Anschluß zur Bearbeitung übernommen werden kann. Die schnittstellenspezifische Signalisierung wird von einer für jeden Anschluß vorgesehenen Adapterschaltung übernommen, die für eine korrekte Signalvermaßung sorgt.

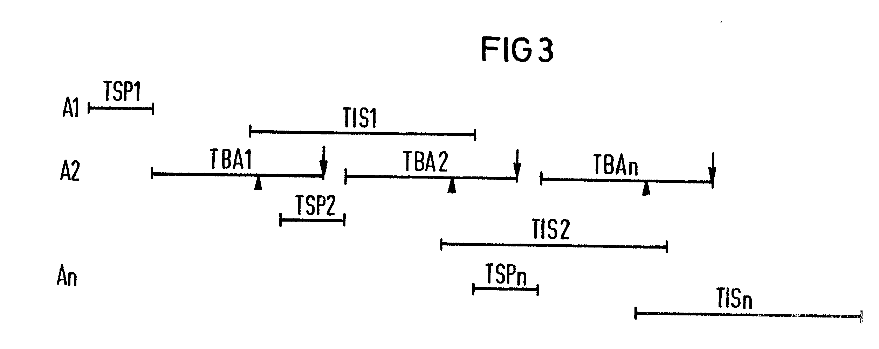

Die durch die vorzeitige Freigabe der Kanalsteuerung KC mögliche überlappende Betriebsweise ist in Fig. 3 für beispielsweise drei Anschlüsse dargestellt. Sie zeigt jeweils für einen Anschluß A1, A2, An die Zeit TSP1, 2 ... n für die Synchronisierung und Prioritätsauswahl, ferner die Zeit TIS1, 2 ... n für die Schnittstellen-Signalvermaßung, außerdem die jeweilige Belegungszeitdauer TBA1, 2 ... n der Kanalsteuerung pro Anschluß und schließlich den Freigabezeitpunkt (nach oben gerichtete Pfeilspitze) für die Auswahl einer neuen Anforderung sowie das jeweilige Ende der Kanalsteuerungsbelegung pro Anschluß (siehe den nach unten gerichteten Pfeil). Aus dieser Darstellung ist ersichtlich, daß die Bearbeitung einer Anforderung auf einem anderen Anschluß bereits freigegeben wird, während der Signalisierungszyklus auf dem ersten Anschluß noch andauert.

Die beschriebene direkte Abwicklung des Datenverkehrs mit den Peripheriegeräten ist für jeweils ein Gerät pro Gerätesteuerung möglich. Wenn von einer Gerätesteuerung ein weiteres Gerät in Betrieb genommen werden soll, wird der betreffende Anschluß vom Ein/Ausgabeprozessor IOP auf Multiplexmodus umgeschaltet. Für diesen Zweck ist in einem Multiplex-Modus-Register MUX-REG ein Steuerbit vorgesehen, das setz- und löschbar ist und den Operationsmodus des betreffenden Anschlusses bestimmt.

Im Multiplexmodus ist für jeden Datentransport die Identifizierung des betreffenden Gerätes erforderlich. Über das Multiplex-Steuerbit wird eine Steuerung C-MUX aktiviert, die in einem zusätzlichen Schnittstellen-Zyklus die zugehörige Geräteadresse aus der Gerätesteuerung abruft und mit der Adresse vergleicht, die im Steuerspeicher CM für den betreffenden Anschluß eingetragen ist. Bei Übereinstimmung beider Adressen wird der Datentransport, wie oben beschrieben, direkt abgewickelt. Wenn die Adressen nicht übereinstimmen, wird die Datentransportanforderung an den Ein/Ausgabeprozessor IOP weitergeleitet und dort durch Mikroabläufe abgehandelt. Die dazu benötigte Information wird dem Ein/Ausgabeprozessor IOP in Form einer Statusangabe mitgeteilt, die neben der Kennung für den Datentransport die Nummer des betreffenden Anschlusses, die Adresse des zu bedienenden Gerätes und das von der Schnittstelle übernommene Datenzeichen enthält. Ob ein solches Datenzeichen ein gültiges Eingabezeichen ist, wird aufgrund von Steuerinformationen durch das Mikroprogramm entschieden. Um die Schnittstellenabläufe von der Reaktionszeit des Ein/Ausgabeprozessors IOP zu entkoppeln, wird die Statusinformation in einen Statusspeicher STM eingetragen und die Multiplexsteuerung C-MUX für einen weiteren Schnittstellenablauf freigegeben. Die Übernahme des Status durch den Ein/Ausgabeprozessor kann dann unabhängig von den Schnittstellenabläufen erfolgen.

## Ansprüche

1. Kanalanschlußsteuerung für eine Datenverarbeitungsanlage, bestehend aus einem Zentralprozessor, einem Arbeitsspeicher (AS) und einem mit dem Zentralprozessor über ein zentrales Bus-System (D-BUS, C-BUS) verbundenen, den Datenverkehr mit mehreren Peripheriegeräten (P1 ... Pz) abwickelnden Ein/Ausgabeprozessor (IOP), bei der die einzelnen Kanäle einerseits mit dem zentralen Bus-System (D-BUS, C-BUS) und andererseits über eine Kanalschnittstelle (KS) mit jeweils einer Gerätesteuerung (GS1 ... 8) verbunden sind, an die ihrerseits ein oder mehrere Peripheriegeräte angeschlossen sind und bei der für jeden Kanal eine Kanalsteuerung (KC) und ein Datenspeicher (DM) mit einer der Breite des zentralen Bus-Systems (D-BUS, C-BUS) entsprechenden Kapazität zur Zwischenspeicherung der über die Kanalschnittstelle (KS) zu übertragenden Daten vorgesehen sind, dadurch gekennzeichnet, daß jedem Kanal zum vorausschauenden Holen von Steuerworten ein Steuerspeicher (CM) für jeweils zwei im Wechselspufferverfahren arbeitende Steuerworte zugeordnet ist und daß zur Vorbereitung des jeweils nächsten Datentransports mit Hilfe eines im Steuerwort vorgesehenen Steuerwortadreßanzeigers eine Umschaltung auf das jeweils alternative Steuerwort erfolgt, welches einen Datentransfer eines neuen Datenwortes in den Datenspeicher (DM) auslöst, während der Ein/Ausgabeprozessor (IOP) aufgrund eines in der Kanalsteuerung (KC) generierten und in einem Statusspeicher (STM) bereitgestellten Statuswortes rechtzeitig vor dem erneuten Umschalten des Steuerwortadreßzeigers ein weiteres Steuerwort zum Nachladen in den Steuerspeicher (CM) anfordert.

2. Kanalanschlußsteuerung nach Anspruch 1, dadurch gekennzeichnet, daß in einem der Kanalsteuerung (KC) zugeordneten Multiplex-Modus-Register (MUX-REG) ein Steuerbit des Steuerworts einspeicherbar ist, das den Operationsmodus des betreffenden Kanals als Selektorkanal mit einem peripheren Gerät oder als Multiplexkanal mit mehreren peripheren Geräten bestimmt.

## Claims

1. A channel terminal control unit for a data processing system, comprising a central processor, a working store (AS), and an input/output processor (IOP) which is connected to the central processor via a central bus system (D-BUS, C-BUS) and handles the data traffic with a plurality of peripheral devices (P1 ... Pz), wherein the individual channels are connected on the one hand to the central bus system (D-BUS, C-BUS) and on the other hand are connected via a channel interface (KS) to a device control unit (GS1 ... 8) to which one or more than one peripheral device is in turn connected, and wherein for each channel there is provided a channel control unit (KC) and a data store (DM) having a capacity corresponding to the width of the central bus system (D-BUS, C-BUS) for the intermediate storage of the data to be transmitted via the channel interface (KS), characterised in that in order that control words can be obtained for a preview each channel is assigned a control store (CM) for in each case two control words operating in an alternating buffer operation, and that in order to prepare the next data transport sequence with the assistance of a control word address indicator contained in the control word a switch-over is made to the respective alternative control word which triggers a data transfer of a new data word into the data store (DM), whilst on the basis of a status word generated in the channel control unit (KC) and made available in a status store (STM) promptly before the new switch-over of the control word indicator the input/output processor (IOP) requests a further control word for reloading into the control store (CM).

2. Channel terminal control unit, as claimed in Claim 1, characterised in that in a multiplex-mode register (MUX-REG) assigned to the channel control unit (KC) it is possible to store control bit of the control word which appoints the operations mode of the channel in question as a selector channel with a peripheral device or as multiplex channel with a plurality of peripheral devices.

**Revendications**

1. Dispositif de commande de raccordements de canaux pour une installation de traitement des données, constituée par un processeur central, une mémoire de travail (AS) et un processeur d'entrée/sortie (IOP), relié au processeur central par l'intermédiaire d'un système de bus central (D-BUS, C-BUS) et effectuant le trafic des données avec plusieurs appareils périphériques (P1 ... Pz), et dans laquelle les différents canaux sont reliés d'une part au système central de bus (D-BUS, C-BUS) et d'autre part par l'intermédiaire d'une interface (KS) de liaison des canaux à des coupleurs respectifs de périphériques (GS1 ... 8), auxquels sont raccordés pour leur part un ou plusieurs appareils périphériques, et dans laquelle il est prévu pour chaque canal un dispositif (KC) de commande de canal et une mémoire de données (DM) possédant une capacité, qui correspond à la largeur du système central de bus (D-BUS, C-BUS) et sert à la mémorisation temporaire des données devant être transmises par l'intermédiaire de l'interface (KS) de liaison des canaux, caractérisé par le fait qu'une mémoire de commande (CM) prévue pour respectivement deux mots de commande opérant selon le procédé du tampon alternatif est associée à chaque canal en vue de la recherche préalable de mots de commande, et que pour la préparation du transfert immédiatement suivant de données à l'aide d'un pointeur d'adresse du mot de commande, prévu dans le mot de commande, il se produit une commutation respectivement sur l'autre mot de commande, qui déclenche un transfert de données d'un nouveau mot de données dans la mémoire de données (DM), tandis que le processeur d'entrée/sortie (IOP) demande en temps opportun avant la nouvelle commutation du pointeur d'adresse du mot de commande, un nouveau mot de commande en vue de son chargement dans la mémoire de commande (CM), sur la base d'un mot d'état produit dans le dispositif (KC) de commande de canaux et préparé dans une mémoire d'état (STM).

2. Dispositif de commande de raccordements de canaux, caractérisé par le fait qu'un bit de commande du mot de commande, qui détermine le mode de fonctionnement du canal considéré en tant que canal de sélection avec un appareil périphérique ou en tant que canal de multiplexage avec plusieurs appareils périphériques, peut être mémorisé dans un registre de mode de multiplexage (MUX-REG) associé au dispositif (KC) de commande de canal.

# FIG 1

# FIG 2

# FIG 3

0 045 043

A1   TSP1

A2   TIS1   TBA1   TBA2   TBAn
     TSP2
     TIS2

An   TSPn
     TISn